# EUROPÄISCHE PATENTANMELDUNG

(11) **EP 2 991 200 A1**
(43) Veröffentlichungstag der Anmeldung: **02.03.2016**
(21) Anmeldenummer: 14182493.8
(22) Anmeldetag: 27.08.2014
(51) Int. Cl.: H02K 3/24, H02K 9/20

(54) **Rotor und Generator**

(71) Anmelder: Siemens Aktiengesellschaft, 80333 München (DE)
(72) Erfinder: Braam, Jan-Henrik, 47546 Kalkar (DE); Evers, Christoph, 46236 Bottrop (DE); Gertz, Simon, 40229 Düsseldorf (DE); Grau Sorarrain, Esteban, 40215 Düsseldorf (DE); Haberer, Oliver, 44225 Dortmund (DE); Hagedorn, Markus, 44789 Bochum (DE); Jäkel, Christian, 47169 Duisburg (DE); Koebe, Mario, 45478 Mülheim an der Ruhr (DE); Kowalski, Matthias, 45470 Mülheim an der Ruhr (DE); Mrkulic, Omer, 46539 Dinslaken (DE); Mölders, Markus, 45472 Mülheim an der Ruhr (DE); Schild, Carolin, 45478 Mülheim an der Ruhr (DE)

(57) **Zusammenfassung**

Die Erfindung betrifft einen Rotor (10) für einen Generator (1) eines Kraftwerks, sowie einen Generator (1) mit einem Rotor (10). Der Rotor (10) umfasst einen Rotorkörper (12), in dem Nuten (15) zur Führung von Stromleitern (22) ausgebildet sind. In den Nuten (15) sind Stromleiter (22) geführt, welche an einem Ende (23), insbesondere einer Stirnseite (14), des Rotorkörpers (12) über den Rotorkörper (12) hinausstehen und in einem Verbindungsbereich (25) miteinander verbunden sind. Es ist mindestens ein wärmeleitendes Element (26) vorgesehen, welches Wärme aus dem Verbindungsbereich (25) in einen thermisch geringer belasteten Bereich des Rotors (10) abführt.

## Beschreibung

Die vorliegende Erfindung betrifft einen Rotor für einen Generator nach Anspruch 1 sowie einen Generator mit einem Rotor nach Anspruch 11.

Im Rotor eines Generators wird mithilfe von Gleichstrom ein Magnetfeld erzeugt. Die für die Stromführung nötigen Kupferleiter werden in Nuten im Rotorkörper axial geführt und von Keilen fixiert. Am Ende des Rotorköpers ergibt sich die Notwendigkeit, einzelne Kupferleiter miteinander zu verbinden, um eine Wicklung in Form einer Spule aufzubauen. In diesem Verbindungsbereich, in dem die Kupferleiter nicht mehr innerhalb des Rotorkörpers geführt werden, wird ein sogenannter Wickelkopf ausgebildet. Dabei wird zwischen Axialleitern, welche über eine Stirnfläche des Rotorkörpers austreten, sowie Tangentialleitern, welche eine tangentiale Verbindung zwischen benachbarten Nuten im Rotorkörper herstellen, unterschieden. Um die mechanische Festigkeit dieser Anordnung bei einer Rotation des Rotors zu gewährleisten, wird der Wickelkopf von einer Kappe eingefasst. Um eine ausreichende Kühlung der Rotorbauteile sicherzustellen, durchströmt ein Kühlmedium den Rotorwickelkopf, wobei das Kühlmedium in Kühlkanälen unterhalb der Nuten im Rotorkörper oder durch zusätzliche Bohrungen an der Rotoroberfläche geführt wird.

All diesen Lösungen ist gemeinsam, dass die Kühlleistung am thermisch hoch belasteten Wickelkopf begrenzt ist oder eine komplizierte, aufwendige und teure Kühlmittelführung und Kühlmittelförderung mit diversen zusätzlichen Zusatzbauteilen notwendig ist, um den Rotorwickelkopf zu kühlen. Alternativ ist auch bekannt, ein Kühlmittelsystem zu verwenden, bei dem eine Förderung des Kühlmediums durch eine Erwärmung beim Durchströmen des Wickelkopfes erreicht wird. Diese Systeme sind jedoch ebenfalls aufwendig und kostenintensiv. Zusätzlich muss beachtet werden, dass neben einer Kühlung des Wickelkopfes eine ausreichende Versorgung der Nutgrundkanäle im Rotorkörper mit Kühlmittel sichergestellt ist.

Schwierig ist dabei, eine gleichmäßige und ausreichende Kühlung von Axial- und Tangentialleitern sicherzustellen. Dabei sind die Kühlmittelverteilung sowie die Anzahl an Öffnungen und Gasauslässen im Rotorkörper aus Festigkeitsgründen begrenzt.

Aufgabe der Erfindung ist es, einen Rotor sowie einen Generator mit einem Rotor mit einer verbesserten Kühlung bereitzustellen, welcher die aus dem Stand der Technik bekannten Nachteile überwindet.

Der erfindungsgemäße Rotor mit den Merkmalen des Anspruchs 1 sowie der erfindungsgemäße Generator mit den Merkmalen des Anspruchs 11 bietet gegenüber den aus dem Stand der Technik bekannten Rotoren bzw. Generatoren den Vorteil, dass die Wärme nicht nur durch Konvektion, sondern zusätzlich durch Wärmeleitung aus dem thermisch hochbelasteten Verbindungsbereich abgeleitet wird. Dadurch wird eine einfache und verbesserte Kühlung des thermisch hoch belasteten Bereichs des Rotors erzielt.

Durch die in den abhängigen Ansprüchen angeführten Maßnahmen sind vorteilhafte Weiterbildungen und Verbesserungen des im unabhängigen Anspruch angegebenen Rotors bzw. Generators möglich.

Eine vorteilhafte Weiterbildung besteht darin, dass das mindestens eine wärmeleitende Element ein Wärmerohr umfasst. Durch ein Wärmerohr lässt sich die überschüssige thermische Energie von dem thermisch hoch belasteten Bereich in thermisch weniger belastete Bereiche des Rotorkörpers oder direkt an einen Kühlkanal für ein Kühlmedium abführen. Ein Wärmerohr ist dabei besonders geeignet, da ein Wärmerohr ein einfaches, aber sehr effizientes wärmeleitendes Element darstellt. Durch ein Wärmerohr können andere, aufwendigere Kühlmaßnahmen im Verbindungsbereich entfallen. Durch ein Wärmerohr kann verglichen mit anderen wärmeleitenden Elementen eine viel effizientere Wärmeabgabe erreicht werden. Dadurch ist es möglich, den Verbindungsbereich bzw. den Wickelkopf stärker elektrisch und/oder thermisch zu belasten, wodurch sich konstruktive Vorteile ergeben. Es können beispielsweise zusätzliche Kühlkanäle entfallen oder der Generator kann bei gleicher Leistung kleiner ausgeführt werden.

Für viele Anwendungsfälle ist es vorteilhaft, wenn der Stromleiter im Verbindungsbereich einen Wickelkopf ausbildet. Ein Wickelkopf ist eine bekannte Möglichkeit, die Stromleiter des Rotors, insbesondere Kupferleiter, miteinander zu verbinden.

Eine vorteilhafte Weiterbildung besteht darin, dass der Verbindungsbereich, insbesondere ein Wickelkopf, durch eine Läuferkappe ummantelt ist. Eine Läuferkappe schützt die empfindlichen elektrischen Leiter des Rotors und erhöht die mechanische Festigkeit im Verbindungsbereich.

Eine weitere vorteilhafte Weiterbildung besteht darin, dass das mindestens eine wärmeleitende Element, insbesondere ein Wärmerohr, den Wickelkopf mit einem Nutgrund der Nuten oder einem Hohlraum zur Führung eines Kühlluftstromes im Rotorkörper verbindet. Die Nutgrunde bzw. Hohlräume stellen thermisch weniger belastete Bereiche bzw. besonders gut durch die Kühlluft gekühlte Bereiche des Rotors dar, so dass die Wärmeabgabe in diesem Bereich besonders einfach erfolgen kann.

Eine weitere vorteilhafte Weiterbildung besteht darin, dass das mindestens eine wärmeleitende Element in radialer Richtung zu einer Mittelachse des Rotors angeordnet ist. Zum einen lassen sich in radialer Richtung einfach und kostengünstig Öffnungen in den Rotorkörper einbringen, durch die das wärmeleitende Element gesteckt bzw. geführt werden kann, zum anderen ist eine radiale Verbindung der kürzeste Weg zwischen dem Verbindungsbereich und einer geeigneten Zone zur Wärmeabgabe, beispielsweise in einem Hohlraum im Rotorkörper. Zusätzlich kann das wärmeleitende Element, wenn es radial zu einer Mittelachse angeordnet wird, als Stabilisation zwischen einzelnen Windungen des Stromleiters im Rotor wirken. Zusätzlich kann bei einer radialen Anordnung und einer Verwendung eines Wärmerohrs die Förderung eines Transportmediums zur Abfuhr der Wärme innerhalb des Wärmerohrs durch die Fliehkräfte bei Rotation des Rotors unterstützt werden.

Eine vorteilhafte Ausgestaltung besteht darin, dass eine Heizzone des Wärmerohrs im Verbindungsbereich der elektrischen Stromleiter und eine Kühlzone des Wärmerohrs in einem Nutgrund einer Nut oder einem Hohlraum zur Führung eines Kühlluftstroms im Rotorkörper angeordnet sind. Somit liegt die Heizzone im thermisch besonders belasteten Bereich des Rotors, während die Kühlzone in einem besonders gut kühlbaren Bereich des Rotors angeordnet ist. Dies erhöht die Wirkung des Wärmerohrs.

Besonders vorteilhaft ist dabei, wenn das Wärmerohr zumindest abschnittsweise in einem Bereich zwischen der Heizzone und der Kühlzone mit einer thermischen und/oder elektrischen Isolierung ummantelt ist. Durch eine thermische Isolation eines mittleren Bereichs des Wärmerohrs kann ein stärkerer thermischer Gradient zwischen der Heizzone und der Kühlzone erreicht werden, was die Effizienz der Kühlung durch das Wärmerohr erhöht. Durch eine elektrische Isolation kann verhindert werden, dass es zu unerwünschten Wirbelströmen kommt, welche den Wirkungsgrad des Rotors bzw. des Generators herabsetzen.

In einer besonders bevorzugten Ausführungsform trennt die Isolation zwei benachbarte elektrische Stromleiter und isoliert diese gegeneinander. Wird die Isolation in einem weichen Werkstoff, beispielsweise einem Polymermaterial ausgeführt, so kann die Isolation zusätzlich als schwingungsdämpfend wirken und die einzelnen Windungen des Stromleiters schützen. Das Wärmerohr kann dabei als Stützelement wirken, so dass ggf. die Keile zur Fixierung der Kupferleiter im Rotorkörper entfallen können.

Eine weitere vorteilhafte Weiterbildung besteht darin, dass mehrere Wärmerohre vorhanden sind. Durch mehrere Wärmerohre, welche bevorzugt gleichmäßig über die Länge des Rotors verteilt angeordnet sind, wird die Wärmeableitung aus dem thermisch hoch belasteten Verbindungsbereich weiter gesteigert und die Kühlleistung erhöht.

Im Folgenden wird ein Ausführungsbeispiel des erfindungsgemäßen Rotors bzw. des erfindungsgemäßen Generators anhand der beigefügten Zeichnungen erläutert. Gleiche Bauteile oder Bauteile mit gleicher Funktion sind dabei mit gleichen Bezugszeichen gekennzeichnet.
Fig. 1 zeigt einen Schnitt durch einen erfindungsgemäßen Rotor.
Fig. 2 zeigt ein Ausführungsbeispiel eines Generators für einen erfindungsgemäßen Rotor.

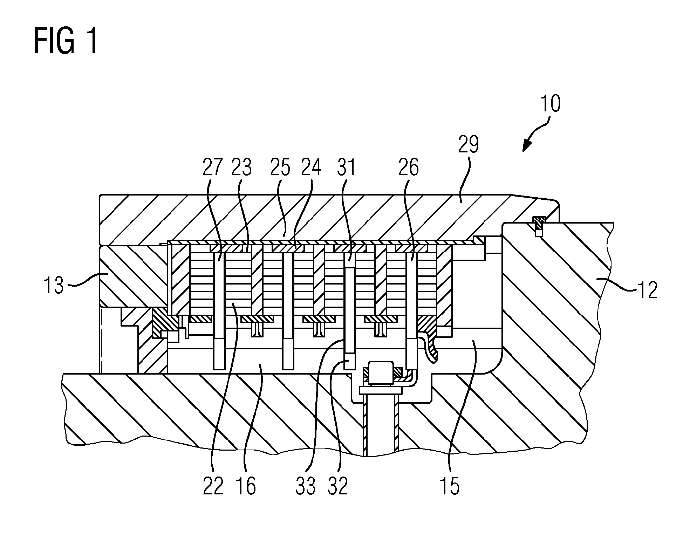

In Fig. 1 ist ein Ausführungsbeispiel eines erfindungsgemäßen Rotors 10 dargestellt. Der Rotor 10 umfasst eine Antriebswelle 11, auf der ein Rotorkörper 12 angeordnet ist. Am Rotorkörper 12 sind Nuten 15 ausgebildet, in welchen Stromleiter 22, insbesondere Kupferdrähte oder Kupferstäbe, verlegt sind. Die Stromleiter 22 sind an ihren Enden 23 miteinander verbunden um eine Wicklung in Form einer Spule 20 auszubilden. Die Stromleiter 22 stehen mit ihren Enden 23 über den Rotorkörper 12 hinaus und werden in einem Verbindungsbereich 25 miteinander verbunden. Im Verbindungsbereich 25 bilden die Stromleiter 22 einen Wickelkopf 24 aus. Der Wickelkopf 24 ist durch eine Läuferkappe 29 geschützt. Im Verbindungsbereich 25 bzw. im Bereich des Wickelkopfes 24 und der Läuferkappe liegt ein thermisch besonders stark belasteter Bereich des Rotors 10. Aus dem thermisch besonders stark belasteten Verbindungsbereich führt ein wärmeleitendes Element 26 in Form eines Wärmerohrs (engl. Heatpipe) 27 zum Nutgrund 16 der Nut 15 im Rotorkörper. Das Wärmerohr 27 weist eine Heizzone 31 und eine Kühlzone 32 auf. Die Heizzone 31 befindet sich dabei im Verbindungsbereich 25, während die Kühlzone 32 im Nutgrund 16 der Nuten 15 angeordnet ist. Zwischen der Heizzone 31 und der Kühlzone 32 kann eine Isolation 33 am Wärmerohr 27 angeordnet sein, welche das Wärmerohr 27 insbesondere in einem Mittelbereich 34 ummantelt. Durch eine Ummantelung im Mittelbereich 34 kann der thermische Gradient zwischen Heizzone 31 und Kühlzone 32 verstärkt werden, was die Wärmeabfuhr durch das Wärmerohr 27 begünstigt. Alternativ bzw. zusätzlich kann der Mittelbereich 34 des Wärmerohrs 27 eine elektrische Isolierung aufweisen. Durch eine elektrische Isolierung kann das Wärmerohr als Trennelement für zwei benachbarte elektrische Stromleiter 22 fungieren und ggf. die sonst zur Fixierung notwendigen Keile ersetzen.

Alternativ zum Nutgrund 16 kann das Wärmerohr 27 auch mit einem anderen Hohlraum 17 im Rotorkörper 12 verbunden sein, der im Vergleich zu dem Verbindungsbereich 25 thermisch geringer belastet ist und insbesondere einen Kühlluftstrom führt. Bevorzugt ist das Wärmerohr 27 dabei in radialer Richtung zu einer Mittelachse 14 des Rotors 10 angeordnet.
Bevorzugt sind mehrere Wärmerohre 27 gleichmäßig über die Länge des Rotorkörpers 10 verteilt, um die Wärmeabfuhr mit zu erhöhen, bzw. eine gleichmäßige Kühlung der einzelnen Bereiche des Rotorkörpers 12 zu erzielen.

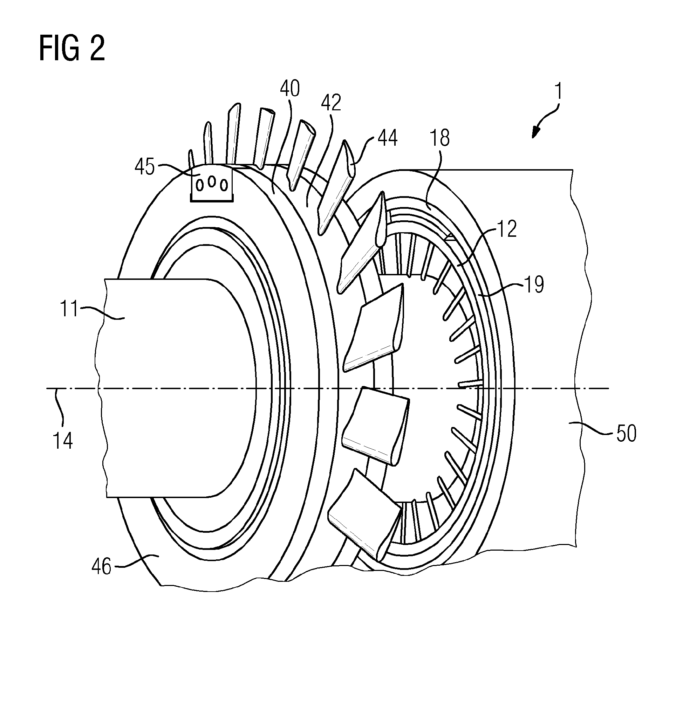

In Fig.2 ist ein erfindungsgemäßer Generator 1 dargestellt. Der Generator 1 weist einen Stator 50 und den Rotor 10 auf. Auf der Antriebswelle 11 des Rotors 10 ist ein Axialgebläse 40 angeordnet, welches einen Kranz 42 mit Gebläseschaufeln 44 aufweist. Der Kranz 42 wird durch zwei Stützringe 46 auf der Antriebswelle 11 gehalten, wobei die Gebläseschaufeln 44 durch ein Fixierelement 45 an den Stützringen 46 in Position gehalten werden. Der Rotor 10 weist an einer den Gebläseschaufeln 44 zugewandten Stirnseite 18 Kühlkanäle auf, über welche ein Kühlmittelstrom, insbesondere ein Luftstrom, in den Rotorkörper 11 in Hohlräume 17, insbesondere zum Nutgrund 16 der Nuten 15 geführt werden kann. Der Rotorkörper 11 weist an der Stirnseite 18 ferner eine umlaufende Ringnut 19 zum Anbringen von Ausgleichsgewichten auf, um den Rotor 11 zu wuchten.

Im Betrieb des Generators 1 wird durch die Gebläseschaufeln 44 ein Kühlluftstrom in axialer Richtung entlang einer Mittelachse des Rotors 10 in den Rotorkörper 11 gefördert. Der Kühlluftstrom kühlt zum einen die Windungen der Stromleiter 22 im Rotor 10, welche direkt vom Kühlluftstrom angeströmt werden, und führt zum anderen Kühlluft in die Nutgrunde 16 der Nuten 15, wo die Kühlzonen 32 der Wärmerohre 27 angeströmt werden. Die Wärmerohre 27 werden im Betrieb im Bereich ihrer Heizzone 31 soweit erhitzt, dass ein Trägermedium im Wärmerohr 27 verdampft und die Wärme in einen thermisch geringer belasteten Bereich des Rotors 10 transportiert. Durch die Abkühlung kondensiert das Trägermedium in den Wärmerohren 27 und wird durch die Rotation und die damit verbundenen Zentrifugalkräfte wieder in Richtung der Heizzonen 31 der Wärmerohre 27 gefördert. Auf diese Art wird durch die Rotation des Rotors 10 der Wärmetransport durch die Wärmerohre 27 noch verstärkt.

Obwohl die Erfindung im Detail durch die bevorzugten Ausführungsbeispiele näher beschrieben wurde, so ist die Erfindung nicht auf die offenbarten Ausführungsbeispiele beschränkt und andere Variationen können vom Fachmann hieraus abgeleitet werden, ohne den Schutzumfang der Erfindung zu verlassen.

## Patentansprüche

1. Rotor (10) für einen Generator (1),
wobei der Rotor (10) einen Rotorkörper (12) umfasst, in dem Nuten (15) zur Führung von Stromleitern (22) ausgebildet sind, und wobei in den Nuten (15) Stromleiter (22) geführt sind, welche an einem Ende (23), insbesondere einer Stirnseite (14) des Rotorkörpers (12) über den Rotorkörper (12) hinausstehen und in einem Verbindungsbereich (25) miteinander verbunden sind, **dadurch gekennzeichnet, dass** mindestens ein wärmeleitendes Element (26) vorgesehen ist, welches Wärme aus dem Verbindungsbereich (25) in einen thermisch geringer belasteten Bereich des Rotors (10) abführt.

2. Rotor (10) nach Anspruch 1,
**dadurch gekennzeichnet, dass**
das mindestens eine wärmeleitende Element (26) ein Wärmerohr (27) umfasst.

3. Rotor (10) nach Anspruch 1 oder 2,
**dadurch gekennzeichnet, dass**
der Stromleiter (22) im Verbindungsbereich (25) einen Wickelkopf (24) ausbildet.

4. Rotor (10) nach einem der Ansprüche 1 bis 3,
**dadurch gekennzeichnet, dass**
der Verbindungsbereich (25) bzw. der Wickelkopf (24) von einer Läuferkappe (29) ummantelt ist.

5. Rotor (10) nach einem der Ansprüche 1 bis 4,
**dadurch gekennzeichnet, dass**
das mindestens eine wärmeleitende Element (26) den Wickelkopf (24) mit einem Nutgrund (16) der Nuten (15) oder einem Hohlraum (17) zur Führung eines Kühlluftstromes im Rotorkörper (12) verbindet.

6. Rotor (10) nach einem der Ansprüche 1 bis 5,
**dadurch gekennzeichnet, dass**
das mindestens eine wärmeleitende Element (26) in radialer Richtung zu einer Mittelachse (14) des Rotors (10) angeordnet ist.

7. Rotor (10) nach Anspruch 2,
**dadurch gekennzeichnet, dass**
eine Heizzone (31) des Wärmerohrs (27) im Verbindungsbereich (25) und eine Kühlzone (32) des Wärmerohrs in einem Nutgrund (16) einer Nut (15) oder einem Hohlraum (17) zur Führung eines Kühlluftstroms im Rotorkörper (12) angeordnet sind.

8. Rotor (10) nach Anspruch 7,
**dadurch gekennzeichnet, dass**
das Wärmerohr (27) zumindest abschnittsweise in einem Bereich zwischen der Heizzone (31) und der Kühlzone (32) mit einer thermischen und/oder elektrischen Isolation (33) ummantelt ist.

9. Rotor (10) nach Anspruch 8,
**dadurch gekennzeichnet, dass**
die Isolation (33) an dem Wärmerohr (27) zwei benachbarte, elektrische Stromleiter (22) gegeneinander isoliert.

10. Rotor (10) nach einem der Ansprüche 2 oder 7 bis 9,
**dadurch gekennzeichnet, dass**
mehrere Wärmerohre (27) vorhanden sind, wobei die Wärmerohre (27), bevorzugt in gleichen Abständen, über die Länge des Rotors (10) verteilt angeordnet sind.

11. Generator (1) mit einem Rotor (10) nach einem der Ansprüche 1 bis 9.
